# EUROPEAN PATENT APPLICATION

(11) **EP 1 310 884 A2**
(43) Date of publication of application: **14.05.2003**
(21) Application number: 02024933.0
(22) Date of filing: 06.11.2002
(51) Int. Cl.: G06F 17/30

(54) **Information retrieval system and information retrieving method therefor**

(30) Priority: 07.11.2001 JP 2001341330; 09.10.2002 JP 2002295531
(71) Applicant: NEC CORPORATION, Tokyo (JP)
(72) Inventor: Teranishi, Toshihiro, Minato-ku, Tokyo (JP)
(74) Representative: VOSSIUS & PARTNER

(57) **Abstract**

To provide an information retrieval system capable of easily finding a site similar to a user s favorite site without any difference in retrieval result obtained for each user and in steps of obtaining information. HTML file obtaining means obtains an HTML file from a Web site in an Internet. Retrieval key extraction means analyzes contents of the HTML file indicated by a URL specified by the user, and extracts a keyword as a retrieval key. Retrieval result storage means retrieves an index table based on the extracted retrieval key, and stores the retrieval result. Retrieval result display means reforms the retrieval result for visibility for the user and outputs the result. Score computation means computes the scores of the HTML tag and the keyword. Index table storage means stores an extracted index.

## Description

The present invention relates to an information retrieval system and an information retrieving method for use with the system, and more specifically to a method of retrieving a Web site disclosing specific contents.

Conventionally, in the method of using an Internet, a search engine for retrieving using a keyword a Web site in which desired contents are disclosed in a Web browser when the keyword used as a retrieval key is input is used.

In this case, since a retrieving process is performed by using the input keyword in the search engine, selecting a keyword by a user and specifying a retrieval condition are important points for efficient retrieval. The retrieving method using a keyword input by the user is disclosed in JP-A-2001-52014.

However, since a retrieval result depends on the keyword selected by a user in the retrieving method using a keyword input by the user, there is a problem that a retrieval result obtained by each user and a step of obtaining information can be different in each case.

The present invention aims at solving the above mentioned problem, and providing an information retrieval system and an information retrieving method for use with the system capable of easily retrieving a site similar to the user s favorite site without changing any retrieval result obtained by each user and a step of obtaining information.

The information retrieval system according to the present invention is an information retrieval system which retrieves a record site of the contents represented by a hypertext file, and includes: extraction means for extracting keywords from an externally specified hypertext file; and retrieval means for retrieving a record site of the contents using the keywords extracted by the extraction means.

The information retrieving method according to the present invention is an information retrieving method which retrieves a record site of the contents represented by a hypertext file, and includes: a step of extracting keywords from an externally specified hypertext file; and a step of retrieving a record site of the contents using the extracted keywords.

That is, the Web site retrieval system (information retrieval system) according to the present invention can easily retrieve a Web site similar to the Web site specified by the user.

In the Web site retrieval system according to the present invention, the user can retrieve a Web site similar to the specified site without inputting a keyword. Therefore, the retrieving process can be performed without bothering about a keyword selection.

According to the present invention, a step of inputting a keyword can be omitted, thereby more easily performing retrieval using a small mobile information terminal (for example, a PDA (personal digital assistants), etc.) and a handy phone, etc. loaded with a browser on which strict restrictions are normally placed on means for inputting characters.

In the Web site retrieval system according to the present invention, a keyword can be automatically extracted from an HTML file of the specified site, and control information can be extracted. In this case, not only the contents of the specified site, but also the control information contained in the HTML (hypertext markup language) used in the specified site, for example, the similarity of a tag, etc. can be considered. Therefore, as compared with the case in which only a keyword is used, a more similar site can be retrieved, thereby more easily performing a retrieving process.
FIG. 1 is a block diagram of a configuration of a Web site retrieval system according to the first embodiment of the present invention;
FIG. 2 is a flowchart of a process of generating an index table in the Web site retrieval system according to the first embodiment of the present invention;
FIG. 3 is a flowchart of a similar Web site retrieving process in the Web site retrieval system according to the first embodiment of the present invention;
FIG. 4 shows a display screen of a Web browser shown in FIG. 1;
FIG. 5 shows an example of an input of a URL on the display screen of the Web browser shown in FIG. 4;
FIG. 6 shows an example of a display screen in the Web site retrieval system according to the second embodiment of the present invention;
FIG. 7 is a flowchart of operations of the Web site retrieval system according to the second embodiment of the present invention;
FIG. 8 shows another example of the display screen in the Web site retrieval system according to the second embodiment of the present invention; and
FIG. 9 shows an example of a display screen in the Web site retrieval system according to the third embodiment of the present invention.

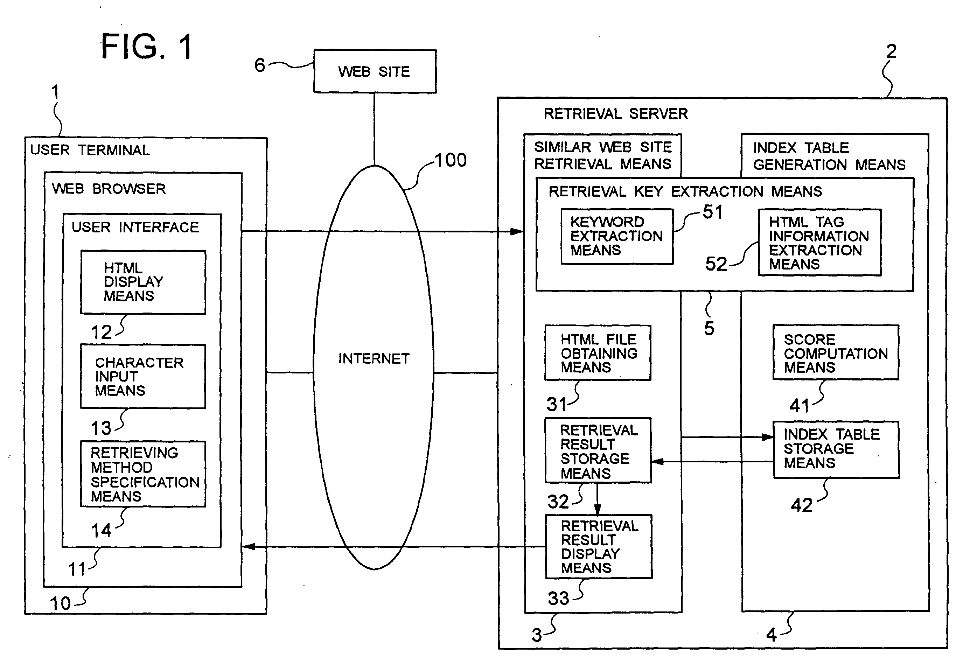

Then, the embodiments of the present invention will be described below by referring to the attached drawings. FIG. 1 is a block diagram of a configuration of a Web site retrieval system according to the first embodiment of the present invention. In FIG. 1, the Web site retrieval system according to the first embodiment of the present invention comprises a user terminal 1 and a retrieval server 2, and the user terminal land the retrieval server 2 are connected to an Internet 100 respectively. A Web (short for WWW (World Wide Web)) site (also referred to as a WWW server) 6 is connected to the Internet 100.

The user terminal 1 comprises a computer, and a Web browser 10 can be operated as an interface with an Internet user (hereinafter referred to as a user). The Web browser 10 provides mainly a function of a user interface 11. The user interface 11 includes an HTML (hypertext markup language) display means 12, a character input means 13, and a retrieving method specification means 14. The user terminal 1 is not limited to a personal computer, but can be a small mobile information terminal [for example, a PDA (personal digital assistants), etc.] and a handy phone, etc. loaded with a browser so far as the Web browser 10 can be operated.

A URL (universal resource locator) is input to the Web browser 10 by using the character input means 13. The retrieving method specification means 14 provides a user interface for using the retrieving method according to the present embodiment.

The retrieval server 2 processes a request from the Web browser 10. The retrieval server 2 is a Web site such as a portal site loaded with a search engine, and comprises a similar Web site retrieval means 3 and an index table generation means 4.

The similar Web site retrieval means 3 provides means for realizing the retrieving method according to the present embodiment, and comprises HTML file obtaining means 31, retrieval key extraction means 5, retrieval result storage means 32, and retrieval result display means 33.

The HTML file obtaining means 31 obtains an HTML file from a Web site 6 existing in the Internet 100. The HTML file obtaining means 31 obtains an HTML file specified in URL when the similar Web site retrieval is performed, and comprehensively collects HTML files from the Web sites 6 in the Internet 100 using a robot or the like when the index table generation means 4 generates an index table.

The retrieval key extraction means 5 analyzes the contents of the HTML file indicated by the URL specified by the user, and extracts a keyword as a retrieval key. Amethod of extracting a keyword can be a method of extracting a morpheme (part of speech) which can be a keyword such as a noun, etc. using a morphological analysis by a keyword extraction means 51 from the HTML file.

When a noun is extracted as a keyword from an HTML file, it is normally considered that apluralityof keywords is extracted from an HTML file. When a plurality of keywords is extracted, a keyword set is used as a retrieval key.

The retrieval key extraction means 5 comprises means for detecting control information contained in an HTML file. According to the present embodiment, it comprises HTML tag information extraction means 52 as means for detecting control information. The information about an HTML tag is extracted by the HTML tag information extraction means 52, and the feature of each HTML tag used in an HTML file is extracted.

The retrieval result storage means 32 retrieves an index table based on a retrieval key extracted by the retrieval key extraction means 5, and stores a retrieval result obtained in the retrieval. The retrieval result display means 33 reforms the retrieval result stored in the retrieval result storage means 32 such that the user can easily view the retrieval result, and then outputs the reformed result. When there are a plurality of retrieval results, a plurality of HTML files are ranked by a score computation means 41 so that the files can be displayed in order. When the Web browser 10 is used as an interface for display, the function of outputting a response from the retrieval server 2 in an HTML file is provided.

The index table generation means 4 comprises the retrieval key extraction means 5 shared with the similar Web site retrieval means 3, the score computation means 41 for computing the scores of the extracted HTML tag and keyword, and an index table storage means 42 storing the extracted index, and generates an index table required to realize similar Web site retrieval.

As the similar Web site retrieval means 3, the retrieval key extraction means 5 extracts an HTML tag and a keyword as a retrieval key. The score computation means 41 computes the scores indicating the priorities of the extracted HTML tag and keyword, and assigns weights respectively to the HTML tag and keyword. That is, the computation is performed such that more important keywords and HTML tags are assigned higher scores, and less important keywords and HTML tags are assigned lower scores. According to the present embodiment, a score computing method is not specified.

The keyword and HTML tag assigned the scores are recorded in the index table stored in the storage means 42. When the retrieval is performed, the similar Web site retrieval means 3 refers to the index table.

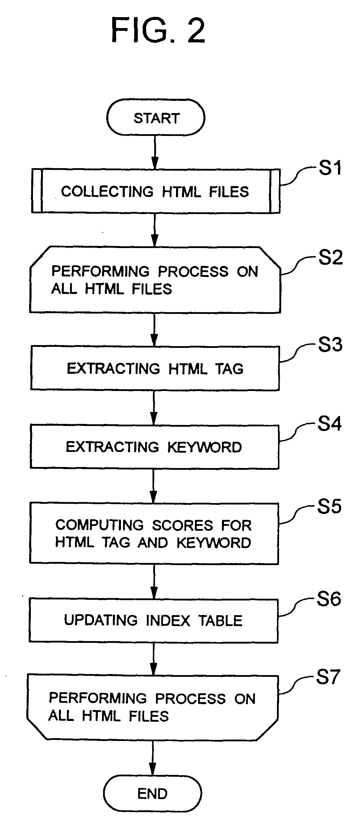

FIG. 2 is a flowchart of a process of generating an index table in the Web site retrieval system according to the first embodiment of the present invention. The process of generating an index table in the Web site retrieval system according to the first embodiment of the present invention will be described below by referring to FIGS. 1 and 2. To realize the retrieving method according to the present embodiment, an index table should be generated in advance.

First, the HTML file obtaining means 31 comprehensively collects HTML files in the Web sites 6 to be retrieved (step S1 in FIG. 2). The HTML files are collected by an HTML file collecting robot to collect all files in Internet 100. However, in the present embodiment, the range in which the HTML files are collected is not specified.

The HTML tag information extraction means 52 of the retrieval key extraction means 5 extracts HTML tags from each HTML file collected by the HTML file obtaining means 31, and obtains the tag information being used (S3 shown in FIG. 2). The HTML tag is extracted by using a script language such as Perl (practical extraction and report language), etc.

Then, the keyword extraction means 51 of the retrieval key extraction means 5 extracts keywords as a retrieval key from the HTML file (step S4 shown in the FIG.2). In extracting a keyword, a morpheme (a part of speech) such as a noun (phrase), etc. is extracted as a keyword from an HTML file through a natural language process such as a morphological analysis.

Since a character string specified by a specific HTML tag, for example, a character string enclosed by TITLE tags functioning as a summary of a document, and a character string of large characters displayed as intensified with the size of the characters (font) specified, can be an important keyword, such character string can be extracted as a keyword.

The score computation means 41 computes scores for the HTML tags and keywords extracted in the steps S3 and S4, and selects, from the extracted HTML tags and keywords, the HTML tags and keywords to be used as a retrieval key which is a significant index (step S5 shown in FIG. 2). Since there are tags for adjustment of layout and style in the extracted HTML tags, or tags irrelevant to the contents of the HTML file, the process is performed for the extracted HTML tags and keywords such that more important HTML tags and keywords are assigned higher scores, and less important HTML tags and keywords are assigned lower scores.

The HTML tags and keywords extracted in the steps S3 and S4 clearly reflect the contents of the HTML file from which they are extracted, and can be the index when the HTML file is retrieved. Thereafter, the index indicates the HTML tags and keywords extracted from the HTML file.

The index table generation means 4 updates the index table by recording in the index table the correspondence between the index obtained in the processes in the steps S3 to S5 and the HTML file (step S6 shown in FIG. 2), and performs the processes in the steps S3 to S5 on all collected HTML files (step S7 shown in FIG. 2).

All HTML files collected by the HTML file obtaining means 31 are processed in the above mentioned processes repeatedly in a loop process (steps S2 to S7 shown in FIG. 2). Furthermore, the updated index table is finally stored in the index table storage means 42.

As a variation of the first embodiment of the present invention, the score computation means 41 computes the scores of the HTML tags and keywords extracted by the retrieval key extraction means 5, but the scores of the keywords only can be computed. In this case, the score computation means 41 computes the scores indicating the priorities of the extracted keywords, and assigns a weight to each keyword.

That is, the computation is performed such that more important keywords are assigned higher scores, and less important keywords are assigned lower scores. The extracted keywords clearly reflect the contents of the HTML file from which they are extracted, and can be an index when the HTML file is retrieved. The index indicates the keywords extracted from the HTML file.

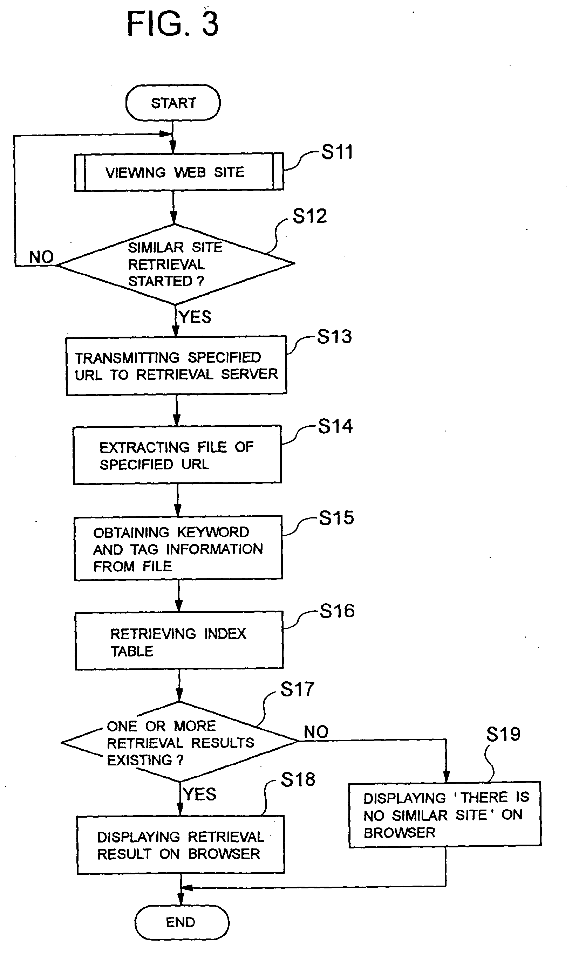

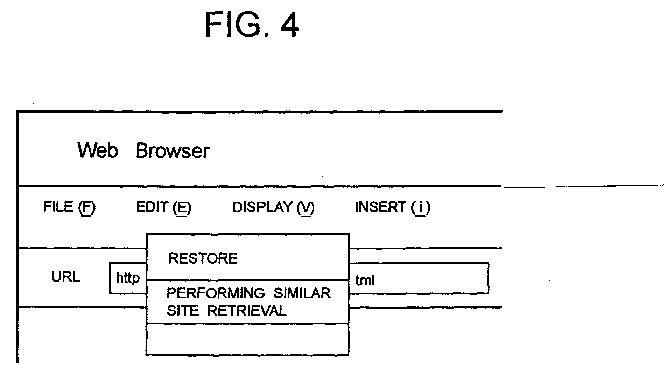

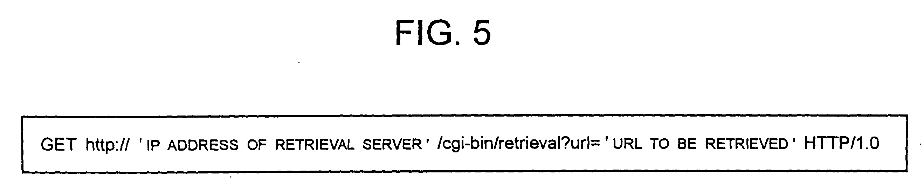

FIG. 3 is a flowchart of a similar Web site retrieval process in the Web site retrieval system according to the first embodiment of the present invention. FIG. 4 shows a display screen of the Web browser 10 shown in FIG. 1. FIG. 5 shows an example of an input of a URL on the display screen of the Web browser 10 shown in FIG. 4. By referring to FIGS. 1, and 3 to 5, the process of the similar Web site retrieval in the Web site retrieval system according to the first embodiment of the present invention is described below. In this process, HTML tags and keywords extracted from each HTML file are used as an index.

First, assume that the user views the Web site 6 in Internet 100 using the Web browser 10 (step S11 shown in FIG. 3). At this time, if the user detects a favorite Web site, and performs the similar Web site retrieval to retrieve Web sites similar to the favorite Web site (step S12 shown in FIG. 3).

Described below will be the similar Web site retrieval performed when the user likes the bulletin board system (BBS) in which, for example, the discussion of new products such as a mobile phone, etc. is made, and tries to find similar sites.

When the similar Web site retrieval is performed, the Web browser 10 transmits the URL specified by the user (URL of the favorite web site) to the retrieval server 2 (step S13 shown in FIG. 3). At this time, it is necessary for the Web browser 10 to store in advance the URL of the retrieval server 2 to which a request is transmitted.

In the Web browser 10 according to the present embodiment, it is assumed that a plug-in for the similar Web site retrieval has been incorporated. When the plug-in is incorporated, for example, as shown in FIG. 4, is it assumed that a menu such as 'performing similar Web site retrieval' can be added to the list of the editing menus of the Web browser 10.

The URL specified by the user is transmitted to the retrieval server 2 from the Web browser 10 by selecting and executing the 'performing similar Web site retrieval' menu. When the plug-in for the similar Web site retrieval is incorporated, the Web browser 10 transmits to the retrieval server 2 an HTTP (hypertext transfer protocol) (GET http://'IP address of retrieval server/cgi-bin/retrieval?url='URL to be retrieved' HTTP/1.0) as shown in FIG. 5.

Upon receipt of the request as shown in FIG. 5 from the Web browser 10, the retrieval server 2 obtains by the HTML file obtaining means 31 an HTML file specified by the 'URL to be retrieved' (step S14 shown in FIG. 3).

When the retrieval server 2 obtains the specified HTML file, it extracts HTML tags from the obtained HTML file by the HTML tag information extraction means 52, and keywords by the keyword extraction means 51 (step S15 shown in FIG. 3).

That is, HTML tags and keywords are extracted from the HTML file of the 'Bulletin Board for Discussion of Mobile Phones' being presently viewed by the user. In the case of the HTML file of the 'Bulletin Board for Discussion of Mobile Phones', keywords expected to be extracted are: the 'bulletin board' from the character string in the TITLE tag of the HTML tag, and the ' new product name' , ' carrier name', 'manufacturer name, 'price', 'value', 'function', 'ringing tone', 'liquid crystal', 'mail', etc. from the contents of the HTML file.

The more the keywords are extracted, the more the contents and topics of the HTML file (in this case, the bulletin board for discussion of mobile phones) can be extracted. Using the keyword set as a retrieval key, the retrieval can be started, and BBS sites for discussion of the similar topics can be retrieved.

The index table stored in the index table storage means 42 is retrieved using the retrieval key of the HTML tags and keywords extracted from the HTML file (step S16 shown in FIG. 3). The retrieval result hit on (applied to) the retrieval key is stored in the retrieval result storage means 32. Whether or not a retrieval result has hit on (applied to) the retrieval key is determined by the presence/absence of the retrieval key as an index in the index table.

For example, when the 'bulletin board' , ' 'new product name' , 'carriername', 'manufacturername, 'price', 'value', 'function', 'ringing tone', 'liquid crystal', 'mail', etc. are extracted as the retrieval key from the HTML file of the 'bulletin board for discussion of mobile phones', it is checked whether or not the retrieval key has been recorded as the index in the index table.

If there are no retrieval results when referring to the retrieval result storage means 32 (step S17 shown in FIG. 3), then 'There are no similar sites' is displayed on the Web browser 10 (step S19 shown in FIG. 3).

If there is more than one retrieval result in the retrieval result storage means 32 (step S17 shown in FIG. 3), then the retrieval result display means 33 transmits a retrieval result to the Web browser 10, and the retrieval result is displayed thereon (step S18 shown in FIG. 3).

If there are a plurality of retrieval results, the score computation is performed based on any reference, and the retrieval results can be displayed in order from the highest score. For example, the computation can be performed such that the score of the retrieval result (similar Web site) containing more tags and keywords as the retrieval key can be higher, and this result can be displayed in a higher order on the retrieval result display means 33. However, according to the present embodiment, the score computing method is not specified.

In the above mentioned operation, the similar Web site retrieval can be performed in the Web site retrieval system according to the present embodiment.

Thus, since the user can retrieve a Web site (similar Web site) similar in contents to the Web site being presently viewed by the user, a similar favorite Web site can be easily retrieved.

Furthermore, since the similar Web site retrieval can be performed without inputting any keyword, the user can immediately perform the similar Web site retrieval when the user requests to retrieve a similar Web site.

Additionally, since a keyword is automatically extracted by the retrieval server 2, the laborious operation of inputting a keyword can be omitted, and a plurality of keywords can be extracted depending on the contents of the Web site.

In addition, not only the automatic extraction of a keyword, but also tag information used in the Web site is taken into account. Therefore, a more similar Web site can be retrieved.

In the above mentioned embodiment of the present invention, tag information is extracted as control information, but the control information is not limited to the tag information. For example, control information indicating the position or feature of characters can be extracted.

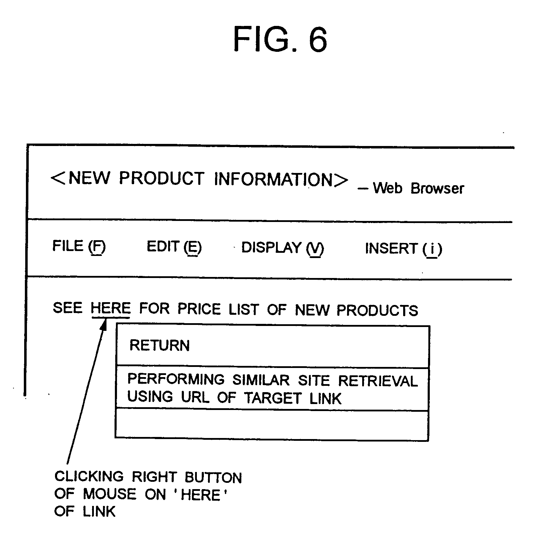

FIG. 6 shows an example of a display screen in the Web site retrieval system according to the second embodiment of the present invention. In the first embodiment of the present invention, a Web site similar in contents to the Web site being presently displayed is retrieved. However, according to the second embodiment, as shown in FIG. 6, an anchor-displayed link is recognized, and the similar Web site retrieval is performed based on the URL of a link target.

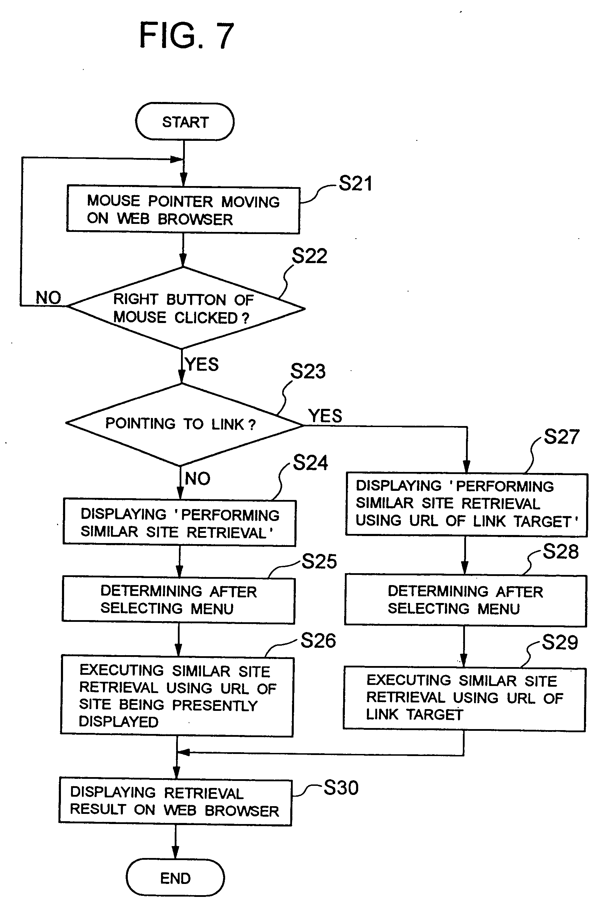

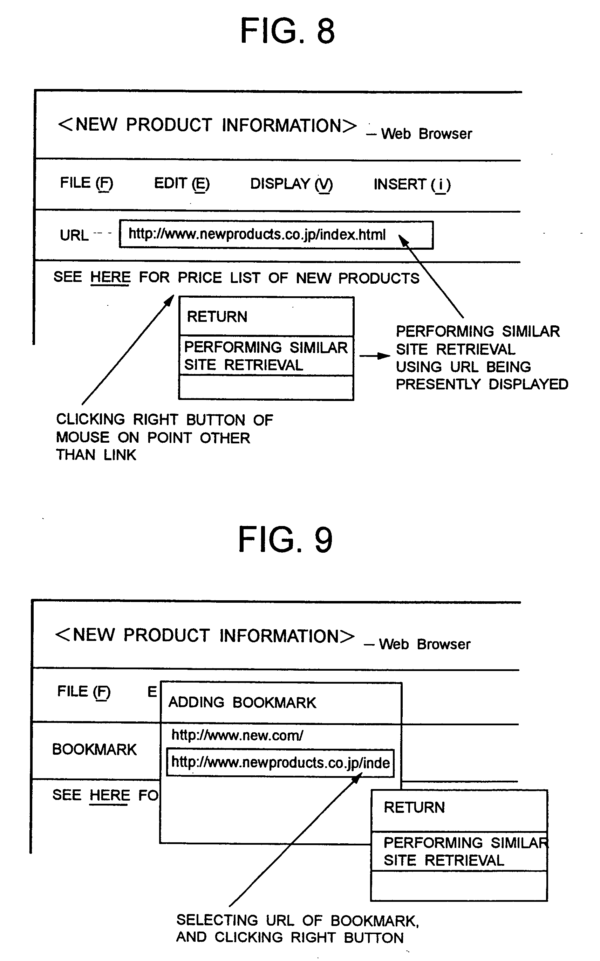

FIG. 7 is a flowchart of operation of the Web site retrieval system according to the second embodiment of the present invention. FIG. 8 shows another example of the display screen in the Web site retrieval system according to the second embodiment of the present invention. By referring to FIGS. 6 to 8, the operations of the Web site retrieval system according to the second embodiment of the present invention are described. The Web site retrieval system according to the second embodiment of the present invention is the same in configuration as the Web site retrieval system shown in FIG. 1.

According to the second embodiment, it is assumed that a mouse not shown in the attached drawings is used as a pointing device for specification of a link while a user is viewing a site using the Web browser 10. When the user views a web site using the Web browser 10, the mouse pointer displayed on the Web browser 10 is moved on the Web browser 10 by using the mouse (step S21 shown in FIG. 7).

At this time, when the right button of the mouse is not clicked (step S22 shown in FIG. 7), the mouse pointer is moved on the Web browser until the right button of the mouse is pressed. When the right button of the mouse is clicked (step S22 shown in FIG. 7), it is determined whether or not the mouse pointer points to an anchor-displayed link (step S23 shown in FIG. 7).

If the mouse pointer points to the anchor-displayed link, then the 'performing similar site retrieval using the URL of a link target' as shown in FIG. 6 is displayed on the menu displayed by pressing the right button (step S27 shown in FIG. 7).

When the user selects and determines the 'performing the similar site retrieval using the URL of a link target' (step S28 shown in FIG. 7), the similar site retrieval is executed by using the URL of the link target (step S29 shown in FIG. 7).

If the mouse pointer does not point to the anchor-displayed link, that is, if it points to an area other than the anchor-displayed link, then the 'performing similar site retrieval' shown in FIG. 8 is displayed on the menu displayed by pressing the right button (step S24 shown in FIG. 7).

When the user selects and determines the 'performing similar site retrieval' (step S25 shown in FIG. 7), the similar site retrieval is executed by using the URL of the Web site being presently displayed (step S26 shown in FIG. 7).

The similar site retrieving method is the same as the method of the Web site retrieval system according to the first embodiment of the present invention. If a response is received from the retrieval server 2, then the retrieval result is displayed on the Web browser 10 (step S30 shown in FIG. 7).

FIG. 9 shows an example of a display screen in the Web site retrieval system according to the third embodiment of the present invention. In the retrieving method of the Web site retrieval system according to the third embodiment of the present invention. a URL is specified when retrieval is performed. Therefore, if a URL can be specified, the similar Web site retrieval can be immediately performed.

Therefore, as shown in FIG. 9, when the user selects the URL recorded on the bookmark of the Web browser 10, the similar Web site retrieval ability can be called by pressing the right button of the mouse. The similar Web site retrieving method is the same as the method of the Web site retrieval system according to the first embodiment of the present invention.

As described above, the present invention can obtain the effect of easily detecting a site similar to the favorite site without any difference in retrieval result obtained by each user or in steps of obtaining information by retrieving a site using a keyword extracted from an HTML file of an externally specified site in the Web site retrieval system for retrieving a site disclosing the contents represented by an HTML file.

## Claims

1. An information retrieval system which retrieves a record site of contents represented by a hypertext file, comprising:
extraction means for extracting keywords from an externally specified hypertext file; and
retrieval means for retrieving a record site of the contents using said keywords extracted by said extraction means.

2. The information retrieval system according to claim 1, wherein said extraction means extracts said keywords from character strings specified by predetermined control information contained in said externally specified hypertext file.

3. The information retrieval system according to claim 1 or 2, further comprising computation means for computing scores indicating priorities for said keywords extracted by said extraction means.

4. The information retrieval system according to claim 3, wherein said computation means selects the keywords to be used as a retrieval key from said extracted keywords by assigning said scores by assigning predetermined weights to predetermined control information and said keywords extracted from character strings specified by the control information.

5. The information retrieval system according to claim 4, further comprising storage means for storing the control information and said keywords for which said scores are computed by said computation means after associating said keywords with the hypertext file from which said keywords are extracted,
wherein said retrieval means retrieves a record site of the contents by searching said storage means.

6. The system according to claim 2, 3, 4 or 5,
wherein said extraction means extracts tag information contained in said hypertext file as said control information, and extracts said keywords from the character strings specified by the tag information.

7. An information retrieving method which retrieves a record site of contents represented by a hypertext file, comprising the steps of:
extracting keywords from an externally specified hypertext file; and
retrieving a record site of the contents using said extracted keywords.

8. The information retrieving method according to claim 7, further comprising a computation step of computing scores indicating priorities for said extracted keywords and tag information contained in said externally specified hypertext file.

9. The information retrieving method according to claim 8, wherein said computation step assigns higher scores to more important HTML (hypertext markup language) tags and keywords, and lower scores to less important HTML tags and keywords so that a retrieval key can be selected as a significant index.

10. The information retrieving method according to claim 9, wherein storage means storing said HTML tags and said keywords assigned said scores after associating said keywords with the HTML file from which said keywords are extracted is searched so that a record site of the contents can be retrieved.
